# EUROPÄISCHE PATENTSCHRIFT

(11) **EP 2 446 724 B1**
(45) Veröffentlichungstag und Bekanntmachung des Hinweises auf die Patenterteilung: **10.07.2013**
(21) Anmeldenummer: 11186745.3
(22) Anmeldetag: 26.10.2011
(51) Int. Cl.: A01B 63/10, A01M 7/00

(54) **Landwirtschaftliche Maschine**
Agricultural machine
Machine agricole

(30) Priorität: 29.10.2010 DE 102010043138
(43) Veröffentlichungstag der Anmeldung: 02.05.2012
(73) Patentinhaber: John Deere Fabriek Horst B.V., 5961 PT Horst (NL)
(72) Erfinder: Kempers, Dave, 6828 BR Arnheim (NL)
(74) Vertreter: Holst, Sönke

(56) Entgegenhaltungen:
- EP-A1- 1 444 894
- WO-A1-02/072275
- WO-A2-03/005799
- DE-A1- 4 140 254
- US-A1- 2007 181 710

## Beschreibung

Die Erfindung betrifft eine landwirtschaftliche Maschine mit einer Gestängeanordnung zum Verfahren eines Anbaugerätes, wobei die Gestängeanordnung ein mehrere miteinander gekoppelte Lenker umfassendes erstes Gestänge umfasst, welches einen an einem Rahmen der Maschine befestigten Teil und einen demgegenüber schwenkbaren Teil aufweist.

Im Stand der Technik sind landwirtschaftliche Maschinen bzw. Fahrzeuge bekannt, die eine Parallelogrammgestängeanordnung aufweisen, mit dem Arbeitsgeräte, wie z.B. ein Spritzengestänge einer landwirtschaftlichen Feldspritze, über dem Boden höhenverstellbar geführt werden. Derartige Parallelogrammgestängeanordnungen weisen in der Regel gleichlange schwenkbare obere und untere Lenker auf, die beidseitig der Fahrzeuglängsachse angeordnet sind, wobei jeweils die oberen und unteren Lenker mit einem ortsfesten Lenker verbunden sind und ein Stellmotor auf einen der schwenkbaren Lenker wirkt.

Eine derartige Maschine wird beispielsweise in der US2007/0181710A1 offenbart, in der eine landwirtschaftliche Feldspritze in Form einer Anhängespritze dargestellt ist, die eine Parallelogrammgestängeanordnung zum vertikalen Verfahren eines Spritzengestänges aufweist. Derartige Parallelogrammgestängeanordnungen sind mit dem Nachteil behaftet, dass sie über relativ lange schwenkbare Lenker verfügen müssen. Beim Verfahren des Parallelogrammgestänges in vertikaler Richtung bewegt sich der Schwerpunkt des zu verfahrenen Spritzengestänges auf einer Kreisbahn, die durch die Länge der Lenker definiert wird. Je länger der Lenker, umso größer kann der Radius der Kreisbahn, der sogenannte Ausschwenkradius, gestaltet werden, also umso geringer ist dann die Bewegung des Schwerpunkts des Spritzengestänges in horizontaler Richtung. Mit einem großen Ausschwenkradius geht vorteilhafter Weise auch eine geringe Schwerpunktverlagerung des Spritzengestänges einher, was für die Gesamtauslegung einer landwirtschaftlichen Feldspritze, insbesondere bei einer Anhängespritze, von großer Bedeutung ist. Um andererseits die Kinematik einer Parallelogrammgestängeanordnung möglichst kompakt zu halten ist es erstrebenswert, dass die Lenker der Parallelogrammgestängeanordnung eine möglichst geringe Länge aufweisen, zumal dadurch auch an Stabilität gewonnen werden kann. Damit ist jedoch ein kleinerer Ausschwenkradius verbunden, wodurch beim Anheben und Absenken relativ große Horizontalbewegungen des an der Parallelogrammgestängeanordnung geführten Anbaugeräts hervorgerufen werden.

Die der Erfindung zugrunde liegende Aufgabe wird darin gesehen, eine landwirtschaftliche Maschine der eingangs genannten Art anzugeben, welche eine kompakte Gestängeanordnung zum vertikalen Verfahren eines Anbaugerätes mit geringen Horizontalbewegungen für das Anbaugerät aufweist.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine landwirtschaftliche Maschine der eingangs genannten Art mit einer Gestängeanordnung versehen, welche ein mehrere miteinander gekoppelte Lenker umfassendes zweites Gestänge umfasst, welches einen zusammen mit dem schwenkbaren Teil des ersten Gestänges verschwenkbaren ersten schwenkbaren Teil und einen demgegenüber zweiten schwenkbaren Teil aufweist, wobei ausgehend von dem befestigten Teil sich die Lenker des ersten Gestänges in Richtung des ersten schwenkbaren Teils des zweiten Gestänges erstrecken und ausgehend vom ersten schwenkbaren Teil des zweiten Gestänges sich die Lenker des zweiten Gestänges in Richtung des befestigten Teils des ersten Gestänges erstrecken, und wobei ein Lenker des ersten Gestänges mit einem Lenker des zweiten Gestänges über einen Verbindungslenker gelenkig miteinander verbunden sind. Dadurch, dass die Gestängeanordnung in wenigstens zwei Gestänge aufgeteilt ist, können die einzelnen Gestänge für sich mit reduzierten Baulängen ausgebildet werden, wodurch eine stabile und kompakte Ausführung der Gestängeanordnung ermöglicht wird. Gleichzeitig wird durch diese Art der Gestängeanordnung erzielt, dass ein durch die Gestängeanordnung vertikal verschwenkbares Anbaugerät relativ geringe Horizontalbewegungen ausführt. Dies kann dadurch begründet werden, dass die Ausschwenkradien der einzelnen kompakt gestaltbaren Gestänge durch ihre in der Länge kurz gehaltenen Lenker zwar relativ klein sind, sich jedoch die dadurch relativ groß ausgebildeten Horizontalbewegungen der einzelnen schwenkbaren Teile der Gestänge mit ihren zueinander entgegen gesetzten Ausrichtungen teilweise oder nahezu vollständig kompensieren lassen, wodurch sich insgesamt eine deutlich geringere Horizontalbewegung des Anbaugerätes erzielen lässt. Dadurch können Vorteile bezüglich der Schwerpunkverteilung des Anbaugerätes beim vertikalen Verfahren in Bezug auf die Gesamtauslegung der landwirtschaftlichen Maschine erzielt werden.

Der schwenkbare Teil des ersten Gestänges und der erste schwenkbare Teil des zweiten Gestänges können durch einen gemeinsamen Lenker ausgebildet sein, wobei es auch denkbar ist, das zweite Gestänge mit einem separaten Lenker an den schwenkbaren Lenker des ersten Gestänges zu befestigen.

Das erste und/oder zweite Gestänge kann als Parallelogrammgestänge ausgebildet ist, wobei auch andere geometrische Anordnungen von Gestängen gewählt werden können, beispielsweise Trapeze oder andere mehreckige Polygone.

Vorzugsweise weist jedoch das erste und das zweite Parallelogrammgestänge jeweils einen oberen und einen demgegenüber parallel geführten unteren Lenker auf, wobei der Verbindungslenker sich von dem unteren Lenker des ersten Parallelogrammgestänges zu dem oberen Lenker des zweiten Parallelogrammgestänges erstreckt. In gleicher Weise ist auch einen umgekehrte Anordnung zweckmäßig, so dass das erste und das zweite Parallelogrammgestänge jeweils einen oberen und einen demgegenüber parallel geführten unteren Lenker aufweisen und der Verbindungslenker sich von dem oberen Lenker des ersten Parallelogrammgestänges zum unteren Lenker des zweiten Parallelogrammgestänges erstreckt. Auch andere Ausführungen von Verbindungen sind denkbar, solange die Bewegungen des einen Parallelogrammgestänges mit den Bewegungen des anderen Parallelogrammgestänges gekoppelt sind.

Vorzugsweise weist der obere oder untere Lenker des ersten oder zweiten Parallelogrammgestänges gegenüber dem unteren bzw. oberen Lenker des entsprechenden Parallelogrammgestänges eine Verlängerung auf, an welche der Verbindungslenker angelenkt ist. Mit seinem anderen Ende ist der Verbindungslenker vorzugsweise in einem mittleren Bereich des entsprechend anderen Lenkers, an den er befestigt ist, angelenkt. Durch diese Art der Anlenkung wird ein besonders vorteilhafter Bewegungsablauf des schwenkbaren Teils des zweiten Parallelogrammgestänges mit geringen Horizontalbewegungen erzielt, beispielsweise, wenn der Verbindungslenker im mittleren Bereich des unteren Lenkers des ersten Gestänges und an der Verlängerung des oberen Lenkers des zweiten Gestänges angelenkt ist.

Die Gestängeanordnung umfasst einen Stellmotor, welcher mit einem der Lenker der Gestängeanordnung verbunden ist. Durch Betätigung des Stellmotors, der beispielsweise als elektrischer Stellmotor, als pneumatischer oder hydraulischer Hubzylinder, oder als eine andere Art von Aktuator ausgebildet ist, kann die Gestängeanordnung bewegt werden, wobei der Stellmotor einen Ends am Rahmen der Maschine bzw. an einem starr befestigten Teil des ersten Gestänges und anderen Ends vorzugsweise an einem der oberen oder unteren Lenker des ersten Gestänges angelenkt ist.

Das zweite Gestänge ist mit einem Anbaugerät verbunden, welches durch im wesentlichen vertikales Verschwenken in seiner Höhe gegenüber dem Boden verstellbar ist. Je nach geometrischer Anordnung und Ausbildung der Gestänge bzw. je nach Abmessungen der Lenker und Anlenkpunkte sind unterschiedlich große Höhenverstellungen erzielbar.

Die landwirtschaftliche Maschine kann als selbst fahrendes oder gezogenes Fahrzeug ausgebildet sein. So kann die landwirtschaftliche Maschine beispielsweise als Schlepper bzw. Traktor, Erntemaschine, Sämaschine, Forstmaschine, Spritzmaschine oder Düngemaschine Anwendung finden. Gleichfalls eignet sich eine solche Gestängeanordnung auch für die Anwendung an gezogenen Fahrzeugen, wie beispielsweise Anhängespritzen, Sämaschinen, Bodenbearbeitungsmaschinen, Düngestreuer etc. So kann die landwirtschaftliche Maschine als gezogene landwirtschaftliche Spritzmaschine zum Ausbringen von Pflanzenschutzmittel ausgebildet sein. Wie oben bereits erwähnt, kann die landwirtschaftliche Maschine als Spritze bzw. Spritzmaschine ausgebildet sein. Dabei kann es sich um eine durch einen landwirtschaftlichen Schlepper gezogene oder auch um eine selbst fahrende Feldspritze handeln. Des Weiteren ist es denkbar, die Maschine als Anbauspritze auszubilden, welche beispielsweise über eine Dreipunktvorrichtung an einen landwirtschaftlichen Schlepper angebaut ist. Ferner sind noch andere Varianten möglich, die Maschine auszubilden. So kann die Maschine beispielsweise als Bodenbearbeitungsmaschine ausgebildet sein, welche ein oder mehrere über ein oder mehrere Gestängeanordnungen geführte Säeinheiten oder Pflugschare oder dergleichen aufweist. Des Weiteren kann es sich auch um eine Mähmaschine handeln, die ein oder mehrere über Gestängeanordnungen geführte Mähvorsätze aufweist. Ferner kann es sich auch um einen landwirtschaftlichen Schlepper sowie um ein anderes selbst fahrendes oder auch um ein von einem Schlepper gezogenes landwirtschaftliches Fahrzeug handeln, welches über eine Gestängeanordnung verfügt. Die Gestängeanordnung kann zum Anbringen eines beliebigen Anbaugeräts, welches in variablen Abständen über den Boden geführt werden soll, eingesetzt werden. Des Weiteren sind auch noch weitere Varianten und Ausführungsformen von land-, forst-oder gartenwirtschaftlichen Maschinen möglich, die sich im Lichte der Beschreibung einem Fachmann ohne Weiteres erschließen und unter die vorliegende Erfindung fallen.

Das Anbaugerät kann beispielsweise als Spritzengestänge ausgebildet sein, welches für den Einsatz an Spritzmaschinen zum Ausbringen des Spritzguts verwendet wird. Das Spritzengestänge kann dann mit dem schwenkbaren Teil des zweiten Gestänges verbunden werden und höhenverstellbar zum Ausbringen des Spritzguts über den Boden geführt werden. Alternativ kann das Anbaugerät auch als Verteilgestänge, beispielsweise für Flüssigdünger und dergleichen, ausgebildet sein. Denkbar ist auch der Einsatz eines Gebläsesprühers oder einer Streuvorrichtung als Anbaugerät.

Die Gestängeanordnung ist derart ausgebildet und geometrisch angeordnet, dass durch Bewegen bzw. Verschwenken des ersten Gestänges der schwenkbare Teil des ersten und/oder zweiten Gestänges im Wesentlichen vertikal zur Bodenoberfläche gelenkig angeordnet ist. Dies kann beispielsweise durch eine sich am schwenkbaren Teil des ersten und/oder zweiten Gestänges erstreckende Verbindungsstrebe oder durch einen Lenker erfolgen, die bzw. der im Wesentlichen vertikal zur Bodenoberfläche geführt wird. Von besonderem Vorteil ist, dass bei Einsatz einer erfindungsgemäßen landwirtschaftlichen Maschine bei einer Höhenverstellung des Anbaugeräts nur eine sehr geringe horizontale Bewegung des Anbaugeräts erfolgt und damit auch nur eine geringe Änderung des um eine Fahrzeugachse wirkenden Drehmoments eintritt. Dadurch werden Kräfteschwankungen am Fahrzeug reduziert bzw. minimiert was beispielsweise zu einer konstanteren Vertikalkraft an einer Anhängekupplung führt. Diese Vorteile können wiederum in der Gesamtauslegung des Fahrzeugs genutzt werden, so kann beispielsweise an einer gezogenen Spritzmaschine die Kapazität des Spritzmitteltanks erhöht bzw. optimiert werden, da ein Anstieg der Belastung der Anhängekupplung beim Verschwenken bzw. Ausschwenken des Spritzengestänges durch die geringe Horizontalbewegung des Spritzengestänges reduziert wird bzw. vernachlässigbar ist. Vorzugsweise ist, wie oben beschrieben, die Gestängeanordnung im Wesentlichen vertikal zur Bodenoberfläche verschwenkbar angeordnet und dient im Wesentlichen dazu, ein Anbaugerät oder ein Arbeitsgerät bzw. eine Vorrichtung vertikal zu verschwenken. Es ist aber auch denkbar, die Gestängeanordnung horizontal verschwenkbar anzuordnen, so dass entsprechende Anbaugeräte bzw. Arbeitsgeräte oder Vorrichtungen horizontal verschwenkbar sind und über dem Boden in gleichbleibendem Abstand zum Boden jedoch in einem variablen Abstand zur Maschine bewegt werden können. Ein derartiger Einsatz wäre beispielsweise bei Gebläsesprühern nützlich, mit denen in unterschiedlich breit angelegten Pflanzenreihen beidseitig des Fahrzeugs Sprühflüssigkeit versprühbar ist und welche verstellbare Auslassöffnungen aufweisen.

Die landwirtschaftliche Maschine kann für vielerlei Arten von Anbaugeräten genutzt werden, wobei das Anbaugerät vorzugsweise, insbesondere ein Spritzengestänge, über zwei parallel angeordnete Gestängeanordnungen, die sich auf beiden Seiten der Maschine erstrecken geführt wird, wobei die Gestängeanordnungen über das Anbaugerät bzw. Spritzengestänge oder über einen Verbindungsrahmen miteinander verbunden werden. Es ist aber auch denkbar, nur eine Gestängeanordnung an der Maschine vorzusehen und diese beispielsweise mittig zur Maschine anzuordnen und entsprechend stabil auszubilden.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

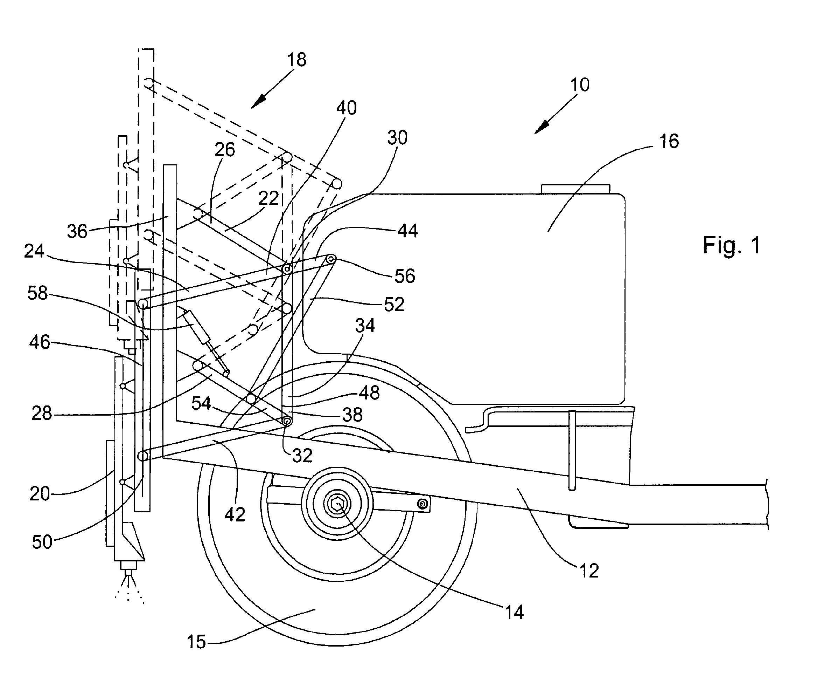

- Fig. 1: eine Seitenansicht einer landwirtschaftlichen Maschine mit einer erfindungsgemäßen Gestängeanordnung.

In der Figur 1 ist eine landwirtschaftliche Maschine 10 in Form einer landwirtschaftlichen Anhängespritze dargestellt. Anstelle der in diesem Ausführungsbeispiel gewählten Anhängespritze können jedoch auch andere Fahrzeuge entsprechend ausgebildet werden. Die Maschine 10 weist einen Rahmen 12 und eine an einen hinteren Bereich des Rahmens 12 angeordnete Achse 14 mit Rädern 15 auf. Über eine nicht gezeigte Anhängevorrichtung kann die Maschine 10 an ein Zugfahrzeug, beispielsweise an einen landwirtschaftlichen Schlepper, angehängt werden.

Die Maschine 10 ist des Weiteren mit einem Tank 16 versehen, der als Vorratsbehälter für zu versprühende Flüssigkeit dient.

Vom Rahmen 12 aus erstreckt sich eine Gestängeanordnung 18, an dessen freien Endbereich ein Anbaugerät 20 in Form eines Spritzgestänges montiert ist. Das Anbaugerät 20 ist über nicht gezeigte Verbindungsleitungen mit dem Tank 16 verbunden und dient zum Ausbringen der zu versprühenden Flüssigkeit.

Die Gestängeanordnung 18 verfügt über ein erstes Gestänge 22 und über ein zweites Gestänge 24.

Das erste Gestänge 22 weist einen oberen und einen unteren Lenker 26, 28 auf, die parallel zueinander geführt sind. Der obere und untere Lenker 26, 28 sind einenends am Rahmen 12 oder an einem am Rahmen 12 starr befestigten Teil 36 gelenkig befestigt und erstrecken sich ausgehend davon in Bezug auf die Maschine 10 in Vorwärtsrichtung (siehe Pfeil in Figur 1). Anderenends sind die beiden Lenker 26, 28 an einem oberen Gelenkpunkt 30 und einem unteren Gelenkpunkt 32 gelenkig mit einem sich im Wesentlichen vertikal erstreckenden Lenker 34 verbunden, derart, dass die Lenker 26, 28, 34 und der starr befestigten Teil 36, an dem die Lenker 26, 28 einenends gelenkig befestigt sind, ein Parallelogrammgestänge bilden. In Bezug auf das erste Gestänge 22 bilden somit der Bereich des Rahmens 12 bzw.der am Rahmen 12 starr befestigte Teil 36, an dem die Lenker 26, 28 einenends gelenkig befestigt sind, einen gegenüber dem Rahmen 12 ortsfesten oder befestigten Teil 36 und der Lenker 34 einen demgegenüber schwenkbaren Teil 38 dar.

Das zweite Gestänge 24 weist einen oberen und einen unteren Lenker 40, 42 auf, die parallel zueinander geführt sind. Der untere Lenker 42 des zweiten Gestänges 24 ist einenends am schwenkbaren Teil 38 des ersten Gestänges 22 am unteren Gelenkpunkt 32 des Lenkers 34 gelenkig befestigt. Der obere Lenker 40 des zweiten Gestänges 24 weist gegenüber dem unteren Lenker 42 eine Verlängerung 44 auf und ist am schwenkbaren Teil 38 des ersten Gestänges 22 am oberen Gelenkpunkt 30 des Lenkers 34 gelenkig befestigt, wobei der obere Gelenkpunkt 30 zwischen den beiden Enden des oberen Lenkers 40 des zweiten Gestänges 24 angeordnet ist. Der Lenker 34 stellt somit einen gemeinsamen Lenker 34 für das erste und das zweite Gestänge 22, 24 dar. Die Verlängerung 44 des oberen Lenkers 40 entspricht in etwa einem Drittel des unteren Lenkers 42. Die Lenker 40, 42 des zweiten Gestänges 24 erstrecken sich ausgehend vom schwenkbaren Teil 38 des ersten Gestänges 22 bzw. ausgehend vom Lenker 34 bzw. von den jeweiligen Gelenkpunkten 30, 32 und in Bezug auf die Maschine 10 in Rückwärtsrichtung, also entgegen gesetzt zu den Lenkern 26, 28 des ersten Gestänges 22. An den rückwärts gerichteten Enden der Lenker 40, 42 sind die Lenker 40, 42 gelenkig mit einem sich im Wesentlichen vertikal erstreckenden Lenker 46 verbunden, derart, dass die Lenker 40, 42, 46 und der gemeinsame Lenker 34, ebenfalls ein Parallelogrammgestänge bilden, wobei in Bezug auf den oberen Lenker 40 des zweiten Gestänges 24 nur der Bereich zwischen einem Befestigungspunkt am Lenker 46 und dem Gelenkpunkt 30 am Lenker 34 einzubeziehen ist. Hierbei bilden für das zweite Gestänge 24 der gemeinsame Lenker 34 einen ersten schwenkbaren Teil 48, der zugleich auch den schwenkbaren Teil 38 des ersten Gestänges 22 ausmacht, und der Lenker 46 einen zweiten schwenkbaren Teil 50. Der schwenkbare Teil 38 des ersten Gestänges 22 und der erste schwenkbare Teil 48 des zweiten Gestänges 24 fallen somit hier in dem gemeinsamen Lenker 34 zusammen.

Das erste Gestänge 22 und das zweite Gestänge 24 sind über einen Verbindungslenker 52 miteinander verbunden. Dazu ist der Verbindungslenker 52 einenends an einem Gelenkpunkt 54 in einem mittleren Bereich des unteren Lenkers 28 des ersten Gestänges 22 gelenkig mit diesem gekoppelt. Anderenends ist der Verbindungslenker 52 an einem Gelenkpunkt 56 mit dem Ende der Verlängerung 44 gelenkig gekoppelt. Durch den Verbindungslenker 52 sind das erste und das zweite Gestänge 22, 24 derart miteinander gekoppelt, dass eine Schwenkbewegung des ersten Gestänges 22 eine Schwenkbewegung des zweiten Gestänges 24 auslöst.

Die Lenker 26, 28, 34, 40, 42, 46, 52. können beispielsweise als Flach-, Winkel- oder Rohrprofile ausgebildet sein, wobei sie entsprechend ihrer statischen und dynamischen Belastung entsprechend unterschiedlich stark ausgebildet sind.

Des Weiteren ist ein Stellmotor 58 vorgesehen, der sich zwischen dem Rahmen 12 oder dem mit dem Rahmen 12 befestigten Teil 36 und dem unteren Lenker 28 des ersten Gestänges 22 erstreckt und mit beidem gelenkig verbunden ist. Der Stellmotor 58 dient zur Einleitung einer Stellkraft des Stellmotors 58 auf das erste Gestänge 22.

Der Stellmotor 58 ist in Form eines Hydraulikzylinders ausgebildet und wird über eine nicht gezeigte Hydraulikansteuerung zum Heben und Senken des ersten Gestänges 22 angesteuert.

Durch Ausfahren und Einfahren des Stellmotors 58 wird der untere Lenker 28 des ersten Gestänges 22 verschwenkt und das erste Gestänge 22 (Parallelogrammgestänge) um die Befestigungspunkte des oberen und unteren Lenkers 26, 28 am Rahmen 12, bzw. an dem fest mit dem Rahmen 12 verbundenen Teil 36, angehoben bzw. abgesenkt. Dadurch, dass die Lenker 26, 28, 34 in ihrer Länge bzw. in ihren Anlenkpunkten gemäß einem Parallelogrammgestänge aufeinander abgestimmt sind, wird der schwenkbare Teil 38 des ersten Gestänges 22 in gleichbleibend vertikaler Stellung in seiner Höhe verschoben. Dabei werden die Gelenkpunkte 30, 32 jeweils entlang einer Kreisbahn, mit einem in den jeweiligen Befestigungspunkten am Rahmen 12 gelegenen Kreismittelpunkt bewegt. Der Gelenkpunkt 30 wandert dabei mit dem schwenkbaren Teil 38 und verändert dabei seinen Abstand zum Gelenkpunkt 54 am unteren Lenker 28 des ersten Gestänges 22. Gleichzeitig wird der Abstand des Gelenkpunktes 56 zum Gelenkpunkt 54 durch den Verbindungslenker 52 konstant gehalten. Dadurch wird eine durch den Verbindungslenker 52 eingeleitete Schwenkbewegung des oberen Lenkers 40 des zweiten Gestänges 24 um den Gelenkpunkt 30 ausgeführt. Über die Parallelogrammanordnung des zweiten Gestänges 24 wird der untere Lenker 42 des zweiten Gestänges 24 entsprechend parallel zum Lenker 40 um den Gelenkpunkt 32 geschwenkt. Dadurch, dass die Lenker 40, 42, 34 in ihrer Länge bzw. in ihren Anlenkpunkten gemäß einem Parallelogrammgestänge aufeinander abgestimmt sind, wird der Lenker 46 des zweiten Gestänges 24 und damit der zweite schwenkbare Teil 50 des zweiten Gestänges 24 in gleichbleibend vertikaler Stellung zur Bodenoberfläche in seiner Höhe verschoben. Dabei werden die Befestigungspunkte der Lenker 40, 42 an dem zweiten schwenkbaren Teil 50 jeweils entlang einer gegenüber dem Rahmen 12, bzw. gegenüber dem mit dem Rahmen 12 fest verbundenen Teil 36, gesamt resultierenden Bahn verschoben, die nahezu geradlinig verläuft. Die gegenüber dem Rahmen 12 gesamt resultierende Bahn ergibt sich aus den Verschiebungen der Gelenkpunkte 30, 32 relativ zum Rahmen 12 entlang ihrer Kreisbahnen und den Verschiebungen der Befestigungspunkte der Lenker 40, 42 an dem zweiten schwenkbaren Teil 50 des zweiten Gestänges 24 relativ zum dem schwenkbaren Teil 38 des ersten Gestänges 22. Die Geradlinigkeit der gegenüber dem Rahmen 12 resultierenden Bahn und damit die nahezu vertikale Verschiebung des zweiten schwenkbaren Teils 50 des zweiten Gestänges 24 wird durch die gestrichelte Darstellung der Gestängeanordnung 18 in angehobener Stellung in Figur 1 deutlich. Beim Verfahren der Gestängeanordnung 18 durch den Stellmotor 58 ist lediglich eine geringe horizontale Verschiebung des zweiten schwenkbaren Teils 50 des zweiten Gestänges 24 zu verzeichnen (vergleiche gestrichelte Darstellung des angehobenen Zustands gegenüber durchgezogener Darstellung des abgesenkten Zustands der Gestängeanordnung).

Die in der Figur 1 dargestellte landwirtschaftliche Maschine ist an beiden Seiten mit einer Gestängeanordnung 18 ausgerüstet, welche über entsprechende Querverbindungen (nicht gezeigt), beispielsweise Querstreben oder ein Verbindungsrahmen, miteinander verbunden sind.

## Patentansprüche

1. Landwirtschaftliche Maschine (10) mit einer Gestängeanordnung (18) zum Verfahren eines Anbaugerätes (20), wobei die Gestängeanordnung (18) ein mehrere miteinander gekoppelte Lenker (26, 28) umfassendes erstes Gestänge (22) umfasst, welches einen an einem Rahmen (12) der Maschine (10) befestigten Teil (36) und einen demgegenüber schwenkbaren Teil (38) aufweist, **dadurch gekennzeichnet, dass** die Gestängeanordnung (18) ein mehrere miteinander gekoppelte Lenker (40, 42) umfassendes zweites Gestänge (24) umfasst, welches einen zusammen mit dem schwenkbaren Teil (38) des ersten Gestänges (22) verschwenkbaren ersten schwenkbaren Teil (48) und einen demgegenüber zweiten schwenkbaren Teil (50) aufweist, wobei ausgehend von dem befestigten Teil (36) sich die Lenker (26, 28) des ersten Gestänges (22) in Richtung des ersten schwenkbaren Teils (48) des zweiten Gestänges (24) erstrecken und ausgehend vom ersten schwenkbaren Teil (48) des zweiten Gestänges (24) sich die Lenker (40, 42) des zweiten Gestänges (24) in Richtung des befestigten Teils (36) des ersten Gestänges (22) erstrecken, und wobei ein Lenker (26, 28) des ersten Gestänges (22) mit einem Lenker (40, 42) des zweiten Gestänges (24) über einen Verbindungslenker (52) gelenkig miteinander verbunden sind.

2. Landwirtschaftliche Maschine (10) nach Anspruch 1,
**dadurch gekennzeichnet, dass** der schwenkbare Teil (38) des ersten Gestänges (22) und der erste schwenkbare Teil (48) des zweiten Gestänges (24) durch einen gemeinsamen Lenker (34) ausgebildet sind.

3. Landwirtschaftliche Maschine (10) nach Anspruch 1 oder 2,
**dadurch gekennzeichnet, dass** das erste und/oder zweite Gestänge (22, 24) als Parallelogrammgestänge ausgebildet ist.

4. Landwirtschaftliche Maschine (10) nach Anspruch 3,
**dadurch gekennzeichnet, dass** das erste und das zweite Parallelogrammgestänge jeweils einen oberen und einen demgegenüber parallel geführten unteren Lenker (26, 40, 28, 42) aufweisen, wobei der Verbindungslenker (52) sich von dem unteren Lenker (28) des ersten Parallelogrammgestänges zum oberen Lenker (40) des zweiten Parallelogrammgestänges erstreckt.

5. Landwirtschaftliche Maschine (10) nach Anspruch 3,
**dadurch gekennzeichnet, dass** das erste und das zweite Parallelogrammgestänge jeweils einen oberen und einen demgegenüber parallel geführten unteren Lenker (26, 42, 28, 42) aufweisen, wobei der Verbindungslenker (52) sich von dem oberen Lenker (26) des ersten Parallelogrammgestänges zum unteren Lenker (42) des zweiten Parallelogrammgestänges erstreckt.

6. Landwirtschaftliche Maschine (10) nach Anspruch 4 oder 5,
**dadurch gekennzeichnet, dass** der obere oder untere Lenker (26, 28, 40, 42) des ersten oder zweiten Parallelogrammgestänges gegenüber dem unteren (28, 42) bzw. oberen (26, 40) Lenker des entsprechenden Parallelogrammgestänges eine Verlängerung (44) aufweist, an welche der Verbindungslenker (52) angelenkt ist.

7. Landwirtschaftliche Maschine (10) nach einem der vorhergehenden Ansprüche, **dadurch gekennzeichnet, dass** ein Stellmotor (58) enthalten ist, welcher mit einem der Lenker (26, 28, 34, 40, 42, 52) der Gestängeanordnung (18) verbunden ist.

8. Landwirtschaftliche Maschine (10) nach einem oder mehreren der vorhergehenden Ansprüche, **dadurch gekennzeichnet, dass** das zweite Gestänge (24) mit einem Anbaugerät (20) verbunden ist.

9. Landwirtschaftliche Maschine (10) nach einem oder mehreren der vorhergehenden Ansprüche, **dadurch gekennzeichnet, dass** die Maschine (10) als selbst fahrendes oder gezogenes Fahrzeug ausgebildet ist.

10. Landwirtschaftliche Maschine (10) nach einem oder mehreren der vorhergehenden Ansprüche, **dadurch gekennzeichnet, dass** die Maschine (10) als landwirtschaftliche Spritzmaschine ausgebildet ist.

11. Landwirtschaftliche Maschine (10) nach einem oder mehreren der vorhergehenden Ansprüche, **dadurch gekennzeichnet, dass** das Anbaugerät (20) ein Spritzengestänge ist.

12. Landwirtschaftliche Maschine (10) nach einem oder mehreren der vorhergehenden Ansprüche, **dadurch gekennzeichnet, dass** der schwenkbare Teil (38) des ersten Gestänges (22) und/oder der zweite schwenkbare Teil des zweiten Gestänges (22, 24) im Wesentlichen vertikal zur Bodenoberfläche gelenkig angeordnet ist.

13. Landwirtschaftliche Maschine (10) nach einem oder mehreren der vorhergehenden Ansprüche, **dadurch gekennzeichnet, dass** zwei parallel angeordnete Gestängeanordnungen (18) zum Verfahren eines Anbaugeräts (20) vorgesehen sind, die sich auf beiden Seiten der Maschine (10) erstrecken.

## Claims

1. Agricultural machine (10) having a linkage arrangement (18) for moving an attached device (20), wherein the linkage arrangement (18) includes a first linkage (22) which includes a plurality of mutually coupled connectors (26, 28) and has a part (36) secured to a frame (12) of the machine (10) and a part (38) that is pivotal in relation thereto, **characterized in that** the linkage arrangement (18) includes a second linkage (24) which includes a plurality of mutually coupled connectors (40, 42) and has a first pivotal part (48) which can pivot together with the pivotal part (38) of the first linkage (22) and a second part (50) that is pivotal in relation thereto, wherein the connectors (26, 28) of the first linkage (22) extend from the secured part (36) in the direction of the first pivotal part (48) of the second linkage (24) and the connectors (40, 42) of the second linkage (24) extend from the first pivotal part (48) of the second linkage (24) in the direction of the secured part (36) of the first linkage (22), and wherein a connector (26, 28) of the first linkage (22) is connected to a connector (40, 42) of the second linkage (24) by way of a joining connector (52) such that they are connected to one another in an articulated manner.

2. Agricultural machine (10) according to Claim 1, **characterized in that** the pivotal part (38) of the first linkage (22) and the first pivotal part (48) of the second linkage (24) are formed by a common connector (34).

3. Agricultural machine (10) according to Claim 1 or 2, **characterized in that** the first and/or second linkage (22, 24) take the form of a parallelogram linkage.

4. Agricultural machine (10) according to Claim 3, **characterized in that** the first and the second parallelogram linkage each have an upper connector and, guided parallel thereto, a lower connector (26, 40, 28, 42), wherein the joining connector (52) extends from the lower connector (28) of the first parallelogram linkage to the upper connector (40) of the second parallelogram linkage.

5. Agricultural machine (10) according to Claim 3, **characterized in that** the first and the second parallelogram linkages each have an upper and, guided parallel thereto, a lower connector (26, 40, 28, 42), wherein the joining connector (52) extends from the upper connector (26) of the first parallelogram linkage to the lower connector (42) of the second parallelogram linkage.

6. Agricultural machine (10) according to Claim 4 or 5, **characterized in that** the upper or lower connector (26, 28, 40, 42) of the first or second parallelogram linkage has a portion (44) which is prolonged by comparison with the lower connector (28, 42) or upper connector (26, 40) respectively of the corresponding parallelogram linkage, and the joining connector (52) is articulated to this prolonged portion (44).

7. Agricultural machine (10) according to one of the preceding claims, **characterized in that** a servo motor (58) which is connected to one of the connectors (26, 28, 34, 40, 42, 52) of the linkage arrangement (18) is included.

8. Agricultural machine (10) according to one or more of the preceding claims, **characterized in that** the second linkage (24) is connected to an attached device (20).

9. Agricultural machine (10) according to one or more of the preceding claims, **characterized in that** the machine (10) takes the form of an automotive vehicle or a drawn vehicle.

10. Agricultural machine (10) according to one or more of the preceding claims, **characterized in that** the machine (10) takes the form of an agricultural spraying machine.

11. Agricultural machine (10) according to one or more of the preceding claims, **characterized in that** the attached device (20) is a sprayer linkage.

12. Agricultural machine (10) according to one or more of the preceding claims, **characterized in that** the pivotal part (38) of the first linkage (22) and/or the second pivotal part of the second linkage (22, 24) is arranged such that it is articulated substantially vertically in relation to the surface of the ground.

13. Agricultural machine (10) according to one or more of the preceding claims, **characterized in that** two linkage arrangements (18) which are arranged parallel and extend on either side of the machine (10) are provided to move an attached device (20).

## Revendications

1. Machine agricole (10) comprenant un agencement de tringlerie (18) pour déplacer un équipement rapporté (20), l'agencement de tringlerie (18) comprenant une première tringlerie (22) comprenant plusieurs bras oscillants (26, 28) accouplés les uns aux autres, la première tringlerie présentant une partie (36) fixée à un châssis (12) de la machine (10) et une partie (38) pouvant pivoter par rapport à celle-ci, **caractérisée en ce que** l'agencement de tringlerie (18) comprend une deuxième tringlerie (24) comprenant plusieurs bras oscillants (40, 42) accouplés les uns aux autres, la deuxième tringlerie présentant une première partie pivotante (48) pouvant pivoter conjointement avec la partie pivotante (38) de la première tringlerie (22) et une deuxième partie (50) pivotante par rapport à celle-ci, les bras oscillants (26, 28) de la première tringlerie (22) s'étendant à partir de la partie fixée (36) dans la direction de la première partie pivotante (48) de la deuxième tringlerie (24) et les bras oscillants (40, 42) de la deuxième tringlerie (24) s'étendant à partir de la première partie pivotante (48) de la deuxième tringlerie (24) dans la direction de la partie fixée (36) de la première tringlerie (22), et un bras oscillant (26, 28) de la première tringlerie (22) étant connecté de manière articulée à un bras oscillant (40, 42) de la deuxième tringlerie (24) par le biais d'un bras de liaison (52).

2. Machine agricole (10) selon la revendication 1, **caractérisée en ce que** la partie pivotante (38) de la première tringlerie (22) et la première partie pivotante (48) de la deuxième tringlerie (24) sont réalisées par un bras oscillant commun (34).

3. Machine agricole (10) selon la revendication 1 ou 2, **caractérisée en ce que** la première et/ou la deuxième tringlerie (22, 24) sont réalisées sous forme de parallélogramme articulé.

4. Machine agricole (10) selon la revendication 3, **caractérisée en ce que** le premier et le deuxième parallélogramme articulé présentent à chaque fois un bras oscillant supérieur et un bras oscillant inférieur guidé parallèlement à celui-ci (26, 40, 28, 42), le bras de liaison (52) s'étendant depuis le bras oscillant inférieur (28) du premier parallélogramme articulé jusqu'au bras oscillant supérieur (40) du deuxième parallélogramme articulé.

5. Machine agricole (10) selon la revendication 3, **caractérisée en ce que** le premier et le deuxième parallélogramme articulé présentent à chaque fois un bras oscillant supérieur et un bras oscillant inférieur guidé parallèlement à celui-ci (26, 40, 28, 42), le bras de liaison (52) s'étendant depuis le bras oscillant supérieur (26) du premier parallélogramme articulé jusqu'au bras oscillant inférieur (42) du deuxième parallélogramme articulé.

6. Machine agricole (10) selon la revendication 4 ou 5, **caractérisée en ce que** le bras oscillant supérieur ou inférieur (26, 28, 40, 42) du premier ou du deuxième parallélogramme articulé présente, par rapport au bras oscillant inférieur (28, 42) respectivement supérieur (26, 40) du parallélogramme articulé correspondant, un prolongement (44) auquel est articulé le bras de liaison (52).

7. Machine agricole (10) selon l'une quelconque des revendications précédentes, **caractérisée en ce qu'**il est prévu un moteur de commande (58) qui est relié à l'un des bras oscillants (26, 28, 34, 40, 42, 52) de l'agencement de tringlerie (18).

8. Machine agricole (10) selon l'une quelconque ou plusieurs des revendications précédentes, **caractérisée en ce que** la deuxième tringlerie (24) est reliée à un équipement rapporté (20).

9. Machine agricole (10) selon l'une quelconque ou plusieurs des revendications précédentes, **caractérisée en ce que** la machine (10) est réalisée sous forme de véhicule autopropulsé ou tracté.

10. Machine agricole (10) selon l'une quelconque ou plusieurs des revendications précédentes, **caractérisée en ce que** la machine (10) est réalisée sous forme de machine de pulvérisation agricole.

11. Machine agricole (10) selon l'une quelconque ou plusieurs des revendications précédentes, **caractérisée en ce que** l'équipement rapporté (20) est une rampe de pulvérisation.

12. Machine agricole (10) selon l'une quelconque ou plusieurs des revendications précédentes, **caractérisée en ce que** la partie pivotante (38) de la première tringlerie (22) et/ou la deuxième partie pivotante de la deuxième tringlerie (22, 24) sont disposées de manière articulée essentiellement verticalement par rapport à la surface du sol.

13. Machine agricole (10) selon l'une quelconque ou plusieurs des revendications précédentes, **caractérisée en ce qu'**il est prévu deux agencements de tringlerie disposés en parallèle (18) pour le déplacement d'un équipement rapporté (20), lesquels s'étendent des 2 côtés de la machine (10).
